(19) Europäisches Patentamt / European Patent Office / Office européen des brevets

(11) **EP 2 003 869 A1**

(12) **EUROPEAN PATENT APPLICATION**

(43) Date of publication:
**17.12.2008 Bulletin 2008/51**

(51) Int Cl.:
*H04N 1/405* *(2006.01)*

(21) Application number: **08154107.0**

(22) Date of filing: **04.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.06.2007 KR 20070058418**

(71) Applicant: **Samsung Electronics Co., Ltd.**
**Suwon-si, Gyeonggi-do (KR)**

(72) Inventors:
• **Lee, Ho-keun**
  **Gyeonggi-do (KR)**
• **Shin, Sang-youn**
  **Seoul (KR)**

(74) Representative: **Walaski, Jan Filip et al**
**Venner Shipley LLP**
**20 Little Britain**
**London EC1A 7DH (GB)**

(54) **Method and apparatus for processing an image**

(57) An image forming apparatus to improve image quality. The image forming apparatus includes a window control unit to generate a window of a predetermined size using a lines per inch (LPI) value of a dithering mask and an angle, and to detect locations of a center reference pixel and neighbouring reference pixels in the window, a weighting set unit to apply weighted values to the reference pixels based on locations of the detected center reference pixel and the neighbouring reference pixels, and a control unit to determine a dot size of the center reference pixel corresponding to weighted values corresponding to locations of black pixels of the center reference pixel and neighbouring reference pixels. Accordingly, image quality is improved by generating dots corresponding to a plurality of gray levels based on weighted values.

**EP 2 003 869 A1**

**Description**

The invention relates to a method for improving image quality and an apparatus that uses the image quality improving method, and more particularly, to an image forming apparatus to enhance quality of an image using weighted values according to locations of reference pixels and a method to improve the image quality.

Generally, a monochromic or color laser printer prints images on a subpixel-based gray scale. A gray scale representation in which each pixel is expressed in various gray levels requires a large amount of data to be processed. Accordingly, the large amount of data is transmitted from a computer to a laser printer to process various gray scale pixels, and as such, a data transmission time increases and a greater capacity memory is required for the laser printer. A general 1-bit gray scale representation involves halftone processing of simply turning on or off pixels or dots.

However, halftone images look rough, especially, in lighter areas, because halftone processing simply turns on or off pixels or dots. To solve this problem, 1-bit gray scale representation is executed. U.S. patent Publication No. 2003-0038853 discloses a method of 1-bit gray scale representation.

The method of U.S. patent Publication No. 2003-0038853 changes a size of dots according to gray levels of an input image, and processes the image using a gray level. As a result, a memory to process the image is required, and a quality of an image having a respective lines per inch (LPI) value and an angle is compensated.

In the alternative, a method of generating multi-levels in one-bit data is disclosed in patent Publication No. 2005-0141037. The method includes determining whether a window is within an edge area, and if the window is out of the edge area, generating levels based on a number of dots of neighbouring pixels.

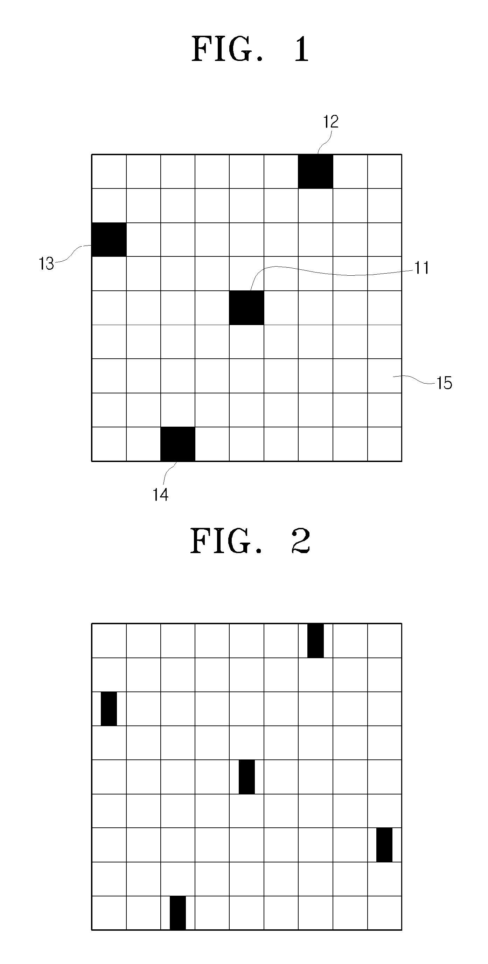

The method is described with reference to Figures 1 and 2. Referring to Figure 2, gray level of current pixel 11 is represented in an average value of dots of pixels 11, 12, 13, 14 and 15 which are turned on. Referring to Figure 1, pixels 11, 12, 13,14 -of pixels 11, 12, 13, 14, 15 are turned on. A gray level of the center pixel 11 is 4/5, and the dot size of the pixel corresponds to 4/5, as illustrated in Figure 2. Accordingly, gray levels are controlled using 5 grays.

More neighbouring pixels are required to generate more gray levels. Therefore, an amount of data to be processed is increased, and a number of grays is limited by the number of neighbouring pixels.

The present general inventive concept provides an image forming apparatus to improve printing quality in which a plurality of gray levels are generated using weighted values according to locations of reference pixels, and a method to improve image quality thereof.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept may be achieved by providing an image forming apparatus, including a window control unit to generate a window of a predetermined size using a lines per inch (LPI) value of a dithering mask and an angle, and to detect locations of a center reference pixel and neighbouring reference pixels in the window, a weighting set unit to apply weighted values to the reference pixels corresponding to the detected locations of the center reference pixel and the neighbouring reference pixels and a control unit to determine a dot size of the center reference pixel based on weighted values corresponding to locations of black pixels of the center reference pixel and the neighbouring reference pixels.

The apparatus may further include a storage unit to store information about a size of pulse signals and a laser scanning unit (LSU) to receive one of the stored pulse signals, and to execute a laser scanning operation, wherein the control unit retrieves pulse signals corresponding to the determined dot size from the storage unit, and inputs the retrieved signals to the LSU.

The storage unit may store information about the size of pulse signals corresponding to each of a plurality of gray levels, and the control unit may add the weighted values corresponding to the locations of the black pixels, and input pulse signals of gray levels corresponding to a sum of the added weighted values to the LSU.

The storage unit may store information about the size of pulse signals according to a predetermined number of gray levels, and the weighting set unit may apply weighted values, so that a sum of weighted values applied to the reference pixels matches the predetermined number of gray levels.

The window control unit may detect a plurality of first neighbouring reference pixels at locations according to the input LPI value and angle, and a plurality of second neighbouring reference pixels at a respective center between a respective two of the plurality of first neighbouring reference pixels, based on the center reference pixel at the center of the window.

The weighting set unit may apply weighted values such that the center reference pixel has a maximum weighted value, and the second neighbouring reference pixels have a minimum weighted value.

The weighting set unit may apply a same weighted value to the first neighbouring reference pixels and the second neighbouring reference pixels.

A number of the first neighbouring reference pixels and a number of the second neighbouring reference pixels may be 4, respectively.

The apparatus may further include an input unit to receive the LPI value of the dithering mask, and the angle, and to provide the LPI value and the angle to the window control unit.

The foregoing and/or other aspects and utilities of the present general inventive concept may also be achieved by providing a method to improve image quality, the method including receiving a lines per inch (LPI) value of a dithering mask and an angle, generating a window of a predetermined size based on the LPI value and the angle, detecting locations of a center reference pixel and neighbouring reference pixels in the window, applying weighted values to the reference pixels corresponding to the detected locations of the center reference pixel and the neighbouring reference pixels and determining a dot size of the center reference pixel based on weighted values corresponding to locations of black pixels of the center reference pixel and the neighbouring reference pixels.

The method may further include inputting pulse signals corresponding to the determined dot size to a laser scanning unit (LSU).

The determining may add the weighted values corresponding to the locations of the black pixels, and input pulse signals of gray levels corresponding to a sum of the added weighted values to the LSU.

The applying may apply weighted values, so that the sum of added weighted values applied to the reference pixels matches a number of gray levels.

The detecting may detect a plurality of first neighbouring reference pixels at locations based on the LPI value and the angle, and a plurality of second neighbouring reference pixels at a respective center between a respective two of the plurality of first neighbouring reference pixels, based on the center reference pixel at a center of the window.

The applying may apply weighted values such that the center reference pixel has a maximum weighted value, and the second neighbouring reference pixels have a minimum weighted value.

The applying may apply a same weighted value to the first neighbouring reference pixels and the second neighbouring reference pixels.

A number of the first neighbouring reference pixels and a number of the second neighbouring reference pixels may be 4, respectively.

The foregoing and/or other aspects and utilities of the general inventive concept may also be achieved by providing an image forming apparatus including a window control unit to generate a window of a predetermined size, and to detect locations of a center reference pixel, first neighbouring reference pixels and second neighbouring reference pixels in the window, and a weighting set unit to apply weighted values to one or more of the first and second neighbouring reference pixels corresponding to the detected locations, wherein the locations of the second neighbouring pixel references have a harmonic frequency corresponding to the first neighbouring reference pixels, respectively.

The apparatus may further comprise a control unit to determine a dot size of the center reference pixel based on weighted values corresponding to locations of black pixels of the center reference pixel and the neighbouring reference pixels.

The foregoing and/or other aspects and utilities of the general inventive concept may also be achieved by providing a method of operating an image forming apparatus, the method including generating a window of a predetermined size, detecting locations of a center reference pixel, first neighbouring reference pixels and second neighbouring reference pixels in the window, and applying weighted values to one or more of the first and second neighbouring reference pixels corresponding to the detected locations, wherein the locations of the second neighbouring pixel references have a harmonic frequency corresponding to the first neighbouring reference pixels, respectively.

The method may further comprise determining a dot size of the center reference pixel based on weighted values corresponding to locations of black pixels of the center reference pixel and the neighbouring reference pixels.

The foregoing and/or other aspects and utilities of the general inventive concept may also be achieved by providing a computer-readable recording medium having embodied thereon a computer program to execute a method, wherein the method includes generating a window of a predetermined size, detecting locations of a center reference pixel, first neighbouring reference pixels and second neighbouring reference pixels in the window and applying weighted values to one or more of the first and second neighbouring reference pixels corresponding to the detected locations, wherein the locations of the second neighbouring pixel references have a harmonic frequency corresponding to the first neighbouring reference pixels, respectively.

The method may further comprise determining a dot size of the center reference pixel based on weighted values corresponding to locations of black pixels of the center reference pixel and the neighbouring reference pixels.

Embodiments of the invention will now be described, by way of example, with reference to the accompanying drawings, in which:

Figures 1 and 2 are views illustrating pixels corresponding to a method to improve image quality of a conventional image forming apparatus;
Figure 3 is a block diagram illustrating an image forming apparatus according to an exemplary embodiment of the present general inventive concept;
Figure 4 is a schematic diagram illustrating location detection of a center reference pixel and neighbouring reference pixels in an image forming apparatus according to an exemplary embodiment of the present general inventive concept;

Figure 5 is a block diagram illustrating an exemplary embodiment of the image forming apparatus of Figure 3;

Figure 6 is a schematic diagram illustrating a result produced by a method to improve image quality of an image forming apparatus according to an exemplary embodiment of the present general inventive concept;

Figure 7 is a flowchart illustrating a method to improve image quality of an image forming apparatus according to an exemplary embodiment of the present general inventive concept; and

Figure 8 is a flowchart further illustrating the method to improve image quality of Figure 7.

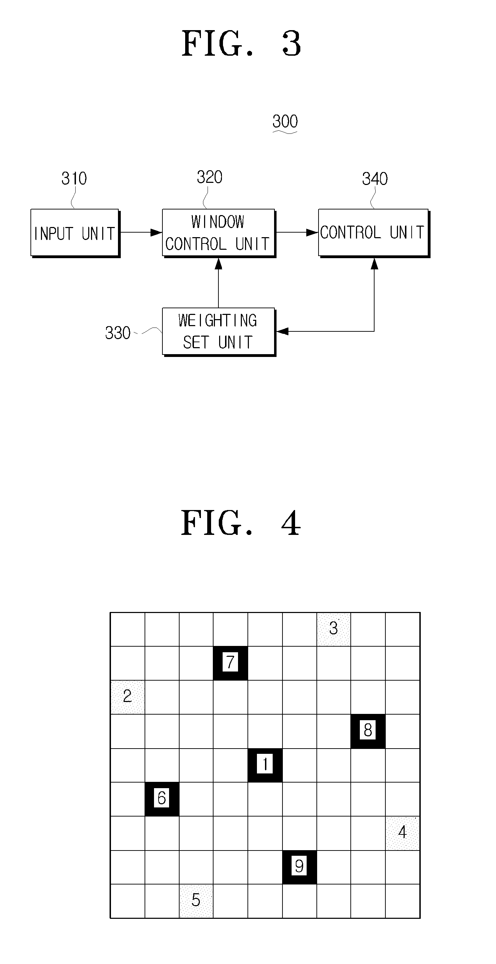

Figure 3 is a block diagram illustrating an image forming apparatus 300 according to an exemplary embodiment of the present general inventive concept. Referring to Figure 3, an image forming apparatus may include an input unit 310, a window control unit 320, a weighting set unit 330, and a control unit 340.

The input unit 310 receives a binary image, a lines per inch (LPI) value of a dithering mask and an angle.

The LPI value, a number of input lines per inch value, represents a screen frequency. The LPI value may be computed by Equation 1.

【Equation 1】

$$\text{LPI value} = \text{resolution} / \text{Euclidean distance between reference pixels}$$

The 'angle' is an angle between reference pixels to be generated. That is, the 'angle' is an inclined angle in a clockwise or a counterclockwise direction on a basis of two axes crossing each other, passing a center reference pixel, on a plane having a center reference pixel and neighbouring reference pixels placed thereon.

The window control unit 320 generates a window of a predetermined size using the input LPI value and angle, and detects locations of a center reference pixel and neighbouring reference pixels in the window. For example, the window control unit 320 may generate a window of a size 9×9.

A description regarding a reference pixel location detection of the window control unit 320 will be explained below with reference to Figure 4.

Figure 4 is a schematic diagram illustrating location detection of a center reference pixel and neighbouring reference pixels in an image forming apparatus according to an exemplary embodiment of the present general inventive concept. A 9×9 window will be described below, as having a resolution of 600dpi, an input LPI value of 134, and an angle of 63 degrees.

A center reference pixel location 1 corresponds to a center pixel at the center of a 9×9 window.

A Euclidean distance between reference dots is 2√5 using the LPI value of 134. The four first neighbouring reference pixel locations 2, 3, 4 and 5, which are positioned at a computed Euclidean distance and at the input angle away from the detected center pixel, are detected. The Euclidean distance between the reference dots is 2.

The location of four second neighbouring pixels 6, 7, 8 and 9 which are positioned at a respective center between a respective two of the four first neighbouring reference pixels 2, 3, 4 and 5 may be detected. That is, the location of the second neighbouring reference pixels 6, 7, 8 and 9 may be the location of the reference pixel having a harmonic frequency corresponding to the first neighbouring reference pixels 2, 3, 4 and 5. The location of the second neighbouring reference pixels 6, 7, 8 and 9 may be set at random.

The weighting set unit 330 applies a weighted value to each of the locations of a center reference pixel and a plurality of neighbouring reference pixels detected from the window control unit 320.

The maximum weighted value may be applied to the center pixel, and the minimum weighted value may be applied to the plurality of second neighbouring reference pixels. Alternatively, the same weighted value may be applied to the center and the plurality of second neighbouring reference pixels.

The control unit 340 detects the locations of black pixels from the locations of the center reference pixel and the neighbouring reference pixels on a window. The control unit 340 sums weighted values of the detected locations, and determines a dot size of the center reference pixel using the summed weighted values.

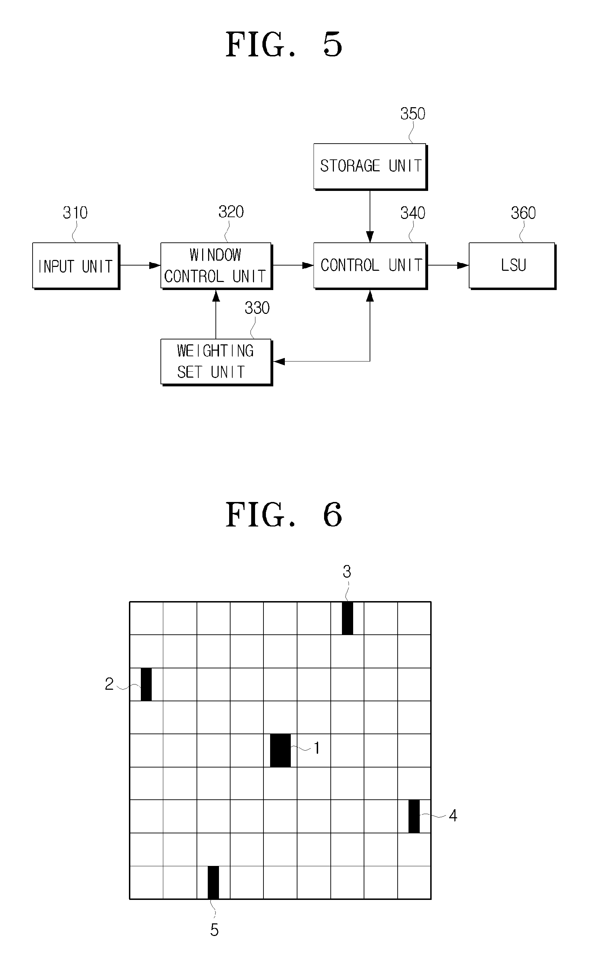

Figure 5 is a block diagram illustrating an embodiment of the image forming apparatus of Figure 3.

Referring to Figure 5, the image forming apparatus 300 can also include a storage unit 350, and a laser scanning unit (LSU) 360, in addition to the other units illustrated in Figure 3.

The storage unit 350 stores a size of a pulse signal corresponding to a plurality of gray levels, which may be stored in a lookup table. If a lookup table having 16 gray levels is provided according to an exemplary embodiment of the present general inventive concept, values of the gray levels may be stored as below.

[Table 1]

| gray level | 0 | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| pulse size | 0 | 1/16 | 2/16 | 3/16 | 4/16 | 5/16 | 6/16 | 7/16 | 8/16 | 9/16 | 10/16 | 11/16 | 12/16 | 13/16 | 14/16 | 15/16 | 1 |

If 32 gray levels are stored in a lookup table, the pulse size corresponding to the gray level may be stored using the same method.

Referring to Figure 5, the control unit 340 may compute the gray level and pulse size according to a number of gray levels without requiring the storage unit 350. That is, the control unit 340 can compute the pulse size, by dividing the sum of the weighted values applied to the turned-on reference pixels, by the sum of the weighted values applied to all reference pixels. The sum of the weighted values applied to the turned-on reference pixels may be a gray level.

The control unit 340 controls the weighting set unit 330 such that the weighted values are applied to the locations of the center reference pixel and neighbouring reference pixels according to the gray levels in the storage unit 350.

The weighting set unit 330 applies weighted values to the respective reference pixels, such that the sum of the weighted values applied to the location of each reference pixel corresponds to the number of the gray levels. The method to apply weighted values is described with reference to Figure 3, and therefore a detailed description will be omitted for the sake of brevity.

The weighting set unit 330 may apply weighted values to locations of respective reference pixels as illustrated in tables 2 and 3. Referring to Figures 3 and 4, the table 2 stores 16 gray levels, and the table 3 stores 32 gray levels. The center reference pixel is positioned at Location 1, the first neighbouring reference pixels are positioned at Location 2 to Location 5, and the second neighbouring reference pixels are positioned at location 6 to Location 9.

[ Table 2 ]

| Location | Location 1 | Location 2 | Location 3 | Location 4 | Location 5 | Location 6 | Location 7 | Location 8 | Location 9 |
|---|---|---|---|---|---|---|---|---|---|
| weight | 4 | 3 | 3 | 3 | 3 | 0 | 0 | 0 | 0 |

[ Table 3 ]

| Location | Location 1 | Location 2 | Location 3 | Location 4 | Location 5 | Location 6 | Location 7 | Location 8 | Location 9 |
|----------|------------|------------|------------|------------|------------|------------|------------|------------|------------|
| weight | 8/32 | 5/32 | 5/32 | 5/32 | 5/32 | 1/32 | 1/32 | 1/32 | 1/32 |

The control unit 340 detects the locations of black pixels, and sums up the weighted values according to the locations of the detected black pixels.

The control unit 340 retrieves or computes the pulse signal size of a respective gray level of the storage unit 350 that corresponds to the weighted value sum, and inputs the retrieved or computed pulse signal size to the LSU 360.

The LSU 360 generates an area to be printed by turning on or off a laser according to the input pulse signal.

For example, if 16 gray levels are used, a pulse signal input to the LSU 360 may be one of 0/16, 3/16, 4/16, 6/16, 7/16, 9/16, 10/16, 12/16, and 16/16.

If 32 gray levels are used, more pulse signals are generated to control the LSU 360. When an area is expressed by lots of bright dots rather than a few dark dots, a user can perceive an output image as being softer, and having a higher resolution.

A plurality of gray levels are generated using weighted values such that an image quality is improved.

Figure 6 is a schematic diagram illustrating a result produced by a method to improve image quality of an image forming apparatus according to an exemplary embodiment of the present general inventive concept. Figure 6 illustrates the dot size in the center reference pixel location 1 determined, using the tables 1 and 2 in accordance with the image forming apparatus illustrated in Figure 5.

Referring to Figure 6, the first neighbouring reference pixel locations 2, 3, 4, and 5 are detected as black pixels. The weighted values corresponding to the respective reference pixel locations are summed referring to the table 2, producing 12 as the result. Accordingly, the LSU receives 12/16 as a pulse signal corresponding to 12 gray levels in the table 1, and a dot of size 12/16 is output on the center reference dot location 1 as illustrated in Figure 6.

Sizes of respective dots may be computed using weighted values of the neighbouring pixels based on the first neighbouring reference pixels 2, 3, 4 and 5 as a center reference pixel, respectively.

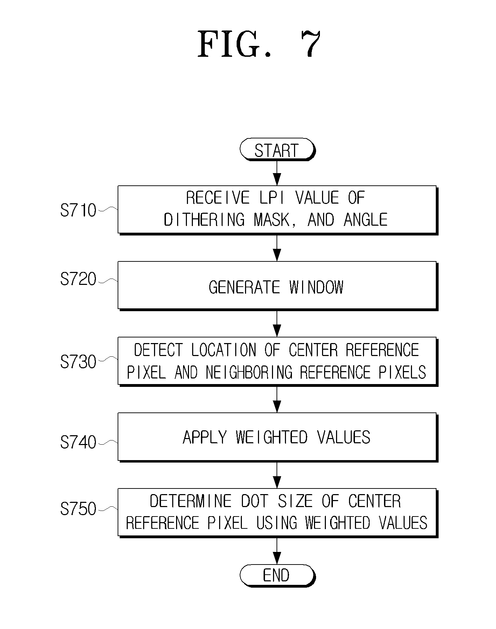

Figure 7 is a flowchart illustrating a method to improve image quality of an image forming apparatus according to an exemplary embodiment of the present general inventive concept. Referring to Figure 7, in operation S710, a binary image, an LPI value of a dithering mask, and an angle are input.

In operation S720, a window of a size $N \times N$ is generated using the input LPI value and the input angle. The size of the generated window is determined considering the LPI value of the dithering mask and the angle. The window size is determined so as to include a center of a sub mask of the dithering mask based on a center pixel of the window.

In operation S730, locations of the center reference pixel and the neighbouring reference pixels within the window are detected. In specific, a center reference pixel at the center of the window is detected. Four first neighbouring reference pixels are detected according to the input LPI value and the input angle on a basis of the detected center reference pixel. Four second neighbouring reference pixel locations between a respective two of the four first neighbouring reference pixels are detected. That is, locations of the second neighbouring reference pixels may be locations in which a frequency becomes a harmonic. The second neighbouring reference pixel locations may be set at random.

In operation S740, weighted values are applied to the locations corresponding to the locations of a detected center reference pixel and a plurality of neighbouring reference pixels. That is, a maximum weighted value may be applied to the center pixel, and a minimum weighted value may be applied to the plurality of second neighbouring reference pixels. Alternatively, a same weighted value may be applied to the plurality of first neighbouring reference pixels and the plurality of second neighbouring reference pixels.

In operation S750, a dot size of the center reference pixel is determined, using the weighted values corresponding to locations of black pixels among the center reference pixel and neighbouring reference pixels.

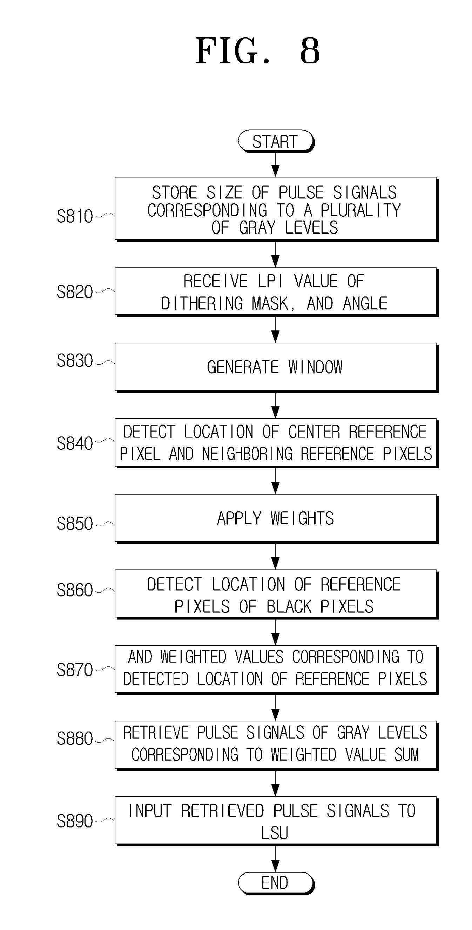

Figure 8 is a flowchart further illustrating the method to improve image quality of Figure 7. Referring to Figure 8, in operation S810, the size of pulse signals corresponding to a plurality of gray levels is stored in a lookup table. The plurality of gray levels may be 16 gray levels or 32 gray levels.

In operation S820, a binary image, an LPI value of a dithering mask, and an angle are input.

In operation S830, a window of size a $N \times N$ is generated using the input LPI value and the input angle. In operation S840, locations of a center reference pixel and neighbouring reference pixels within the generated window are detected.

In operations S850, weighted values are applied to the locations according to the detected locations of the center reference pixel and neighbouring reference pixels. The sum of the weighted values applied to the locations of the reference pixels corresponds to the number of the gray levels stored in operation S810.

In operation S860, reference pixels of black pixels are detected from the locations of the center reference pixel and neighbouring reference pixels. In operation S870, weighted values corresponding to the location of detected reference pixels are summed.

In operation S880, pulse signals of gray levels corresponding to the weighted value sum are retrieved, and in operation S890, the retrieved pulse signals are input to the LSU, to control the exposure time of a laser beam. The plurality of gray levels are generated using weighted values such that image quality is improved.

The present general inventive concept can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system.

Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

As described above, various embodiments of the present general inventive concept provide that weighted values are applied according to locations of reference pixels, and dots according to a plurality of gray levels are generated using weighted values of reference pixels of black pixels among the reference pixels. Accordingly, printing quality is improved.

As a high weighted value is applied to a center reference pixel, an operation to determine an edge area is unnecessary.

Although various embodiments of the present general inventive concept have been illustrated and described, it will be appreciated by those skilled in the art that changes may be made in these embodiments without departing from the principles of the general inventive concept, the scope of which is defined in the appended claims.

**Claims**

1.  An image processing apparatus, comprising:

    means for applying a window of a predetermined size to an image to determine locations of a centre reference pixel and a group of neighbouring reference pixels;
    means for determining a weighted value for each of the determined reference pixel locations; and
    means for determining a value corresponding to the size of a printed dot for the centre reference pixel based on the determined weighted value for the centre reference pixel location.

2.  An image processing apparatus according to claim 1, wherein the group of neighbouring reference pixels comprises a first group of neighbouring reference pixels, the window applying means being further arranged to determine locations of a second group of neighbouring reference pixels and the weighted value determining means being further arranged to apply a weighted value to each of the determined reference pixel locations of the second reference pixel group.

3.  An image processing apparatus according to claim 2, wherein the locations of the second group of neighbouring pixel references have a harmonic frequency corresponding to the first group of neighbouring reference pixels.

4.  An image processing apparatus according to claim 1, 2 or 3, wherein:

    the window applying means comprises a window control unit for generating the window of a predetermined size based on a lines per inch (LPI) value of a dithering mask and an angle, and for detecting locations of the center reference pixel and neighbouring reference pixels in the window;
    the weighted value determining means comprises a weighting set unit for applying weighted values to the reference pixels corresponding to the detected locations of the center reference pixel and the neighbouring reference pixels; and
    the value determining means comprises a control unit to determine a dot size of the center reference pixel based on weighted values corresponding to locations of black pixels of the center reference pixel and the neighbouring reference pixels.

5.  The apparatus of claim 4, further comprising:

    a storage unit for storing information about a size of pulse signals; and
    a laser scanning unit (LSU) for receiving one of the stored pulse signals, and for executing a laser scanning operation,

    wherein the control unit is arranged to retrieve pulse signals corresponding to the determined dot size from the storage unit, and to input the retrieved signals to the LSU.

6.  A method of processing an image, comprising:

    applying a window of a predetermined size to the image to determine locations of a centre reference pixel and a group of neighbouring reference pixels;
    determining a weighted value for each of the determined reference pixel locations; and
    determining a value corresponding to the size of a printed dot for the centre reference pixel based on the determined weighted value for the centre reference pixel location.

7.  A method according to claim 6, wherein the group of neighbouring reference pixels comprises a first group of neighbouring reference pixels, the method further comprising the step of applying the window to determine locations of a second group of neighbouring reference pixels and wherein the step of determining a weighted value further comprises determining a weighted value for each of the determined reference pixel locations of the second reference pixel group.

8.  A method according to claim 6 or 7, further comprising:

    receiving a lines per inch (LPI) value of a dithering mask and an angle;
    generating the window of a predetermined size based on the LPI value and the angle; and
    applying weighted values to the reference pixels corresponding to the detected locations of the center reference pixel and the neighbouring reference pixels; wherein determining a value corresponding to the size of a printed dot comprises:
    determining a dot size of the center reference pixel based on weighted values corresponding to locations of black pixels of the center reference pixel and the neighbouring reference pixels.

9.  The method of claim 8, further comprising:

    inputting pulse signals corresponding to the determined dot size to a laser scanning unit (LSU).

10. The method of claim 9, wherein the determining adds the weighted values corresponding to the locations of the black pixels, and inputs pulse signals of gray levels corresponding to a sum of the added weighted values to the LSU.

11. The method of claim 8, 9 or 10, wherein the applying applies weighted values, so that the sum of added weighted values applied to the reference pixels matches a number of gray levels.

12. The method of any one of claims 8 to 11, wherein the detecting detects a plurality of first neighbouring reference pixels at locations based on the LPI value and the angle, and a plurality of second neighbouring reference pixels at a respective center between a respective two of the plurality of first neighbouring reference pixels, based on the center reference pixel at a center of the window.

13. The method of claim 12, wherein the applying applies weighted values such that the center reference pixel has a maximum weighted value, and the second neighbouring reference pixels have a minimum weighted value.

14. The method of claim 12 or 13, wherein the applying applies a same weighted value to the first neighbouring reference pixels and the second neighbouring reference pixels.

15. The method of claim 12, 13 or 14, wherein a number of the first neighbouring reference pixels and a number of the second neighbouring reference pixels are 4, respectively.

# FIG. 1

# FIG. 2

# FIG. 3

300

# FIG. 4

# FIG. 5

350
STORAGE UNIT

310
INPUT UNIT

320
WINDOW CONTROL UNIT

340
CONTROL UNIT

360
LSU

330
WEIGHTING SET UNIT

# FIG. 6

# FIG. 7

START

S710 — RECEIVE LPI VALUE OF DITHERING MASK, AND ANGLE

S720 — GENERATE WINDOW

S730 — DETECT LOCATION OF CENTER REFERENCE PIXEL AND NEIGHBORING REFERENCE PIXELS

S740 — APPLY WEIGHTED VALUES

S750 — DETERMINE DOT SIZE OF CENTER REFERENCE PIXEL USING WEIGHTED VALUES

END

# FIG. 8

```
                    ( START )
                        │
                        ▼
        ┌──────────────────────────────────┐
S810 ───│   STORE SIZE OF PULSE SIGNALS     │
        │  CORRESPONDING TO A PLURALITY     │
        │        OF GRAY LEVELS             │
        └──────────────────────────────────┘
                        │
                        ▼
        ┌──────────────────────────────────┐
S820 ───│        RECEIVE LPI VALUE OF       │
        │   DITHERING MASK, AND ANGLE       │
        └──────────────────────────────────┘
                        │
                        ▼
        ┌──────────────────────────────────┐
S830 ───│        GENERATE WINDOW            │
        └──────────────────────────────────┘
                        │
                        ▼
        ┌──────────────────────────────────┐
S840 ───│  DETECT LOCATION OF CENTER REFERENCE │
        │ PIXEL AND NEIGHBORING REFERENCE PIXELS│
        └──────────────────────────────────┘
                        │
                        ▼
        ┌──────────────────────────────────┐
S850 ───│         APPLY WEIGHTS             │
        └──────────────────────────────────┘
                        │
                        ▼
        ┌──────────────────────────────────┐
S860 ───│   DETECT LOCATION OF REFERENCE    │
        │      PIXELS OF BLACK PIXELS       │
        └──────────────────────────────────┘
                        │
                        ▼
        ┌──────────────────────────────────┐
S870 ───│ AND WEIGHTED VALUES CORRESPONDING TO │
        │ DETECTED LOCATION OF REFERENCE PIXELS │
        └──────────────────────────────────┘
                        │
                        ▼
        ┌──────────────────────────────────┐
S880 ───│ RETRIEVE PULSE SIGNALS OF GRAY LEVELS │
        │ CORRESPONDING TO WEIGHTED VALUE SUM  │
        └──────────────────────────────────┘
                        │
                        ▼
        ┌──────────────────────────────────┐
S890 ───│  INPUT RETRIEVED PULSE SIGNALS TO │
        │               LSU                 │
        └──────────────────────────────────┘
                        │
                        ▼
                     ( END )
```

**European Patent Office**

**EUROPEAN SEARCH REPORT**

Application Number

EP 08 15 4107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 266 154 B1 (ALLEN DANIEL J [US]) 24 July 2001 (2001-07-24) * abstract; figures 2,3,9-20 * * column 2, line 23 - line 64 * * column 3, line 66 - column 6, line 52 * ----- | 1-15 | INV. H04N1/405 |
| A | US 5 519 792 A (GERSHONY MOSHE [IL]) 21 May 1996 (1996-05-21) * abstract; figure 9 * ----- | 10,11, 13,14 | |
| A | US 2002/101617 A1 (NAGAE AKIKO [JP] ET AL) 1 August 2002 (2002-08-01) * paragraph [0154] - paragraph [0159] * ----- | 1 | |
| A | US 2005/219628 A1 (YASUTOMI KEI [JP] ET AL) 6 October 2005 (2005-10-06) * abstract; figures 3,8,16 * ----- | 1 | |
| A | US 2005/152005 A1 (DAMERA-VENKATA NIRANJAN [US]) 14 July 2005 (2005-07-14) * abstract; figure 1b * * paragraph [0033] - paragraph [0036] * ----- | 1 | TECHNICAL FIELDS SEARCHED (IPC) H04N |

The present search report has been drawn up for all claims

| Place of search | Date of completion of the search | Examiner |
|---|---|---|
| Berlin | 25 September 2008 | Kassow, Harald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 15 4107

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2008

| Patent document cited in search report | | Publication date | Patent family member(s) | | Publication date |
|---|---|---|---|---|---|
| US 6266154 | B1 | 24-07-2001 | WO | 9960776 A1 | 25-11-1999 |
| US 5519792 | A | 21-05-1996 | NONE | | |
| US 2002101617 | A1 | 01-08-2002 | US | 2006159353 A1 | 20-07-2006 |
| US 2005219628 | A1 | 06-10-2005 | JP | 2005192195 A | 14-07-2005 |
| US 2005152005 | A1 | 14-07-2005 | WO | 2005071940 A1 | 04-08-2005 |

EPO FORM P0459

For more details about this annex : see Official Journal of the European Patent Office, No. 12/82

**EP 2 003 869 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030038853 A